# EUROPEAN PATENT APPLICATION

(11) **EP 4 793 675 A1**
(43) Date of publication of application: **19.08.2026**
(21) Application number: 24884562.0
(22) Date of filing: 24.10.2024
(51) Int. Cl.: G02B 1/11, G02B 5/02, G02B 27/01

(54) **DIFFUSION SCREEN, DISPLAY DEVICE, AND VEHICLE**

(30) Priority: 30.10.2023 CN 202311428387
(71) Applicant: HUAWEI TECHNOLOGIES CO., LTD., Shenzhen 518129 (CN)
(72) Inventor: SHU, Xiangping, Shenzhen, Guangdong 518129 (CN); CHANG, Zhiwen, Shenzhen, Guangdong 518129 (CN); MAO, Xunchao, Shenzhen, Guangdong 518129 (CN)
(74) Representative: Grünecker Patent- und Rechtsanwälte PartG mbB
(86) International application number: PCT/CN2024/127048
(87) International publication number: WO 2025/092558

(57) **Abstract**

A diffusion screen (300) is disclosed, and may be used in a projection display apparatus, for example, a head-up display system. The diffusion screen (300) can reduce reflection of incident light on a surface of the diffusion screen (300) and increase transmission, so that when stray light is incident to the surface of the diffusion screen (300), stray light that is reflected and enters an imaging optical path can be reduced, to improve imaging quality of a display system. The diffusion screen (300) includes a first surface (301), and a first film system (302) is disposed on the first surface (301). The first film system (302) is configured to reduce reflectivity of incident light on the first film system (302), and includes a plurality of layers of first films (#1, #2, ..., and #N) with different refractive indexes.

## Description

This application claims priority to Chinese Patent Application No. 202311428387.6, filed with the China National Intellectual Property Administration on October 30, 2023 and entitled "DIFFUSION SCREEN, DISPLAY APPARATUS, AND TRANSPORTATION MEANS", which is incorporated herein by reference in its entirety.

### TECHNICAL FIELD

This application relates to the field of display technologies and the field of intelligent vehicle driving technologies, and more specifically, to a diffusion screen, a display apparatus, and a transportation means.

### BACKGROUND

Vehicles have become an indispensable transportation means in daily life of people. As a quantity of vehicle increases, traffic accidents occur more frequently. To improve driving safety, head-up displays (head-up displays, HUDs), particularly augmented reality head-up displays (augmented reality head-up displays, AR-HUDs), become a popular research direction.

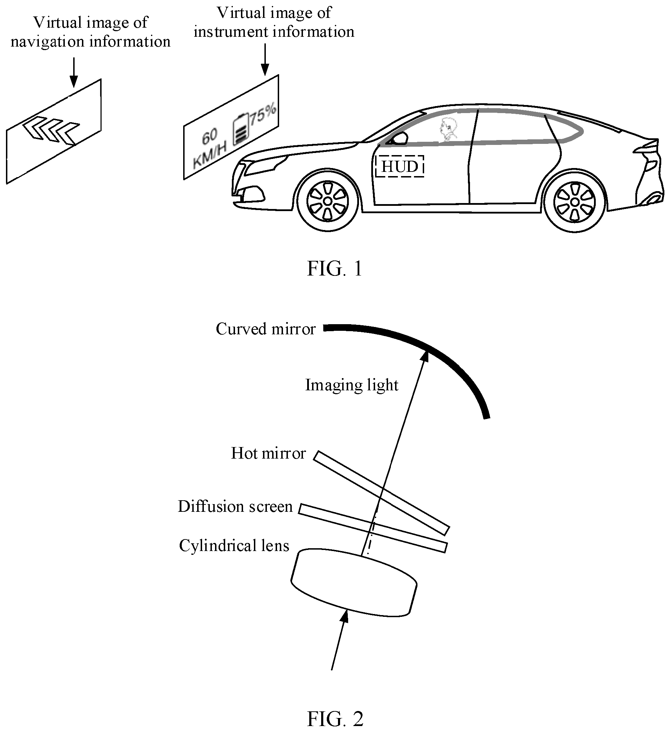

In a HUD system, to avoid glare generated due to sunlight backflow and prevent most stray light from entering human eyes, a direction of a perpendicular bisector of a diffusion screen is usually set to be at an included angle of approximately 15° with a direction of an imaging chief ray. However, a direction of an imaging chief ray emitted by a picture generation unit (picture generation unit, PGU) is usually less than or equal to 15°, which results in an energy loss of imaging light emitted from the diffusion screen. Currently, a general solution is to add a field lens (for example, a cylindrical lens) to a system, and adjust an angle of light by using the field lens, as shown in FIG. 2. However, due to an excessive size of the field lens and a stray light risk on a surface of the field lens, definition of a displayed image is reduced, a size and a glare risk of a HUD system are increased, and design complexity of the HUD system is further increased. Therefore, how to reduce the glare risk of the HUD system without changing an optical path design of the HUD system is a problem that needs to be resolved.

### SUMMARY

This application provides a diffusion screen, a display apparatus, and a transportation means. The diffusion screen provided in this application can implement direction matching between projection light and image light. Using the diffusion screen in the display apparatus can reduce a size of the display apparatus and improve imaging quality of the display apparatus.

According to a first aspect, an embodiment of this application provides a diffusion screen. The diffusion screen includes a first surface. A first film system is disposed on the first surface, the first film system includes a plurality of layers of first films with different refractive indexes, and the first film system is configured to reduce reflectivity of incident light on the first film system.

Based on the foregoing solution, the diffusion screen provided in this application can reduce the reflectivity of the incident light incident to the first film system, so that more incident light is transmitted to the first film system. It may be understood that, when the incident light is image light, the first film system can ensure transmission of a large amount of incident light through the diffusion screen, to reduce a reflection loss of the image light on the diffusion screen. When the incident light is stray light, low reflectivity can prevent deterioration of imaging quality caused by the stray light that is reflected and enters an imaging optical path. Therefore, when the diffusion screen in this application is used in a display system, imaging quality of the system can be ensured, enhancing user experience.

With reference to the first aspect, in some implementations of the first aspect, the refractive indexes of the plurality of layers of first films gradually decrease in a direction away from the first surface.

With reference to the first aspect, in some implementations of the first aspect, the diffusion screen further includes a second surface, the second surface is opposite to the first surface, and a first film system is disposed on the second surface.

The same first film systems are disposed on the first surface and the second surface of the diffusion screen, further improving anti-reflection performance of the diffusion screen. In addition, the same first film systems are disposed, so that a process flow can be further simplified and costs can be reduced.

With reference to the first aspect, in some implementations of the first aspect, refractive indexes of a plurality of layers of first films gradually decrease in a direction away from the second surface.

With reference to the first aspect, in some implementations of the first aspect, the diffusion screen further includes a second surface, the second surface is opposite to the first surface, a second film system is disposed on the second surface of the diffusion screen, the second film system includes a plurality of layers of second films with different refractive indexes, and the second film system is configured to reduce reflectivity of the incident light on the second film system.

The first film system and the second film system are different in at least one of the following:
a quantity of the layers of the first film system and a quantity of the layers of the second film system, a refractive index of at least one of the plurality of layers of first films and a refractive index of at least one of the plurality of layers of second films, and a thickness of at least one of the plurality of layers of first films and a thickness of at least one of the plurality of layers of second films.

Different film systems are disposed on the first surface and the second surface of the diffusion screen, so that usage scenarios of the diffusion screen can be increased, and a design of the diffusion screen is more flexible.

With reference to the first aspect, in some implementations of the first aspect, the refractive indexes of the plurality of layers of second films gradually decrease in a direction away from the second surface.

With reference to the first aspect, in some implementations of the first aspect, at least one of the first film system and the second film system is an anti-reflection AR coating.

With reference to the first aspect, in some implementations of the first aspect, at least one of the first film system and the second film system includes a microstructure, and the microstructure is configured to reduce reflectivity of the incident light on the film system including the microstructure.

Reflectivity of a surface of the first film and reflectivity of a surface of the second film are further reduced by using the microstructure, further improving imaging quality of the system.

With reference to the first aspect, in some implementations of the first aspect, a refractive index of the first film system is determined based on a refractive index of the diffusion screen and target reflectivity of the incident light on the first film system.

According to a second aspect, an embodiment of this application provides a display apparatus. The display apparatus includes a projection module, a first reflection element, a second reflection element, and the diffusion screen according to the first aspect and any one of the possible implementations of the first aspect. The projection module is configured to project image light onto the second surface of the diffusion screen. The diffusion screen is configured to: transmit, from the first surface, the image light from the projection module to the first reflection element, and generate a relay image on the first surface based on the image light from the projection module. The first reflection element is configured to reflect the image light from the diffusion screen to the second reflection element. The second reflection element is configured to reflect the image light from the first reflection element to a human eye.

With reference to the second aspect, in some implementations of the second aspect, an included angle between a normal line of the second surface and the image light incident to the second surface is greater than or equal to 15°.

Based on the foregoing solution, a possibility that sunlight is reflected and enters an imaging optical path can be further reduced, to reduce glare of a display system and improve user experience.

According to a third aspect, an embodiment of this application provides a transportation means. The transportation means includes the display apparatus according to the second aspect and any one of the possible implementations of the second aspect and a windshield. The second reflection element is configured to reflect the image light from the first reflection element to the windshield; and the windshield is configured to reflect the image light from the display apparatus to a human eye.

According to a fourth aspect, an embodiment of this application provides an in-vehicle system. The in-vehicle system includes the display apparatus according to the second aspect and any one of the possible implementations of the second aspect.

### BRIEF DESCRIPTION OF DRAWINGS

FIG. 1 is a diagram of an application scenario of a HUD device according to an embodiment of this application;
FIG. 2 is a diagram of using a cylindrical lens for direction matching between projection light and imaging light of a HUD system;
FIG. 3 is a diagram of a structure of a first diffusion screen 300 according to an embodiment of this application;
FIG. 4 is a diagram of a structure of a second diffusion screen 400 according to an embodiment of this application;
FIG. 5 is a diagram of a structure of a third diffusion screen 500 according to an embodiment of this application;
FIG. 6 is a diagram of a structure of a fourth diffusion screen 600 according to an embodiment of this application;
FIG. 7 is a diagram of a display apparatus 700 according to an embodiment of this application;
FIG. 8 shows a possible structure of a projection module 701 according to an embodiment of this application;
FIG. 9 shows a possible structure of a projection module 701 whose modulation unit 712 is a DMD according to an embodiment of this application;
FIG. 10 is a diagram of an optical path 1000 of a display apparatus 700 used in a transportation means according to an embodiment of this application;
FIG. 11 is a circuit schematic of a display apparatus according to an embodiment of this application; and
FIG. 12 is a diagram of a possible functional framework of a transportation means according to an embodiment of this application.

### DESCRIPTION OF EMBODIMENTS

The following describes technical solutions of embodiments in this application with reference to accompanying drawings.

For ease of understanding of embodiments of this application, the following descriptions are provided.

First, in the following text descriptions or accompanying drawings in embodiments of this application, terms such as "first" and "second" and various numbers are merely used for differentiation for ease of description, but do not necessarily describe a specific order or sequence, and are not intended to limit the scope of embodiments of this application. For example, the terms such as "first" and "second" and various numbers are used for differentiation between different surfaces, different film systems, or the like.

Second, in the following embodiments of this application, terms such as "include", "have", and any variants thereof mean to cover non-exclusive inclusion. For example, a process, method, system, product, or device that includes a series of steps or units is not necessarily limited to those steps or units that are expressly listed, but may include another step or unit not expressly listed or inherent to such a process, method, product, or device.

Third, in embodiments of this application, terms such as "example" or "for example" are used to represent giving an example, an illustration, or a description. An embodiment or design scheme described with "example" or "for example" should not be explained as being more preferred or having more advantages than another embodiment or design scheme. The term such as "example" or "for example" is used to present a related concept in a specific manner for ease of understanding.

Fourth, in embodiments of this application, image light is light carrying an image (or image information), and is used to generate an image.

Fifth, in the accompanying drawings of this application, for ease of description, a thickness, a size, and a shape of each optical element are slightly exaggerated. Specifically, the shape of the optical element shown in the accompanying drawings is shown in an embodiment. For example, a shape of a curved mirror in this application is not limited to a shape of a spherical surface or an aspheric surface shown in the accompanying drawings. In addition, the accompanying drawings are merely examples and are not drawn strictly to scale.

Sixth, unless otherwise limited, all terms (including technical and scientific terms) used in this application have same meanings as understood usually by a person of ordinary skill in the art to which this application belongs. It should be further understood that, terms (such as those defined in common dictionaries) should be interpreted as having meanings consistent with their meanings in the context of related technologies, and will not be interpreted in an idealized or excessive formal sense, unless expressly defined in this specification.

Seventh, in the descriptions of embodiments of this application, an orientation or a position relationship indicated by the term "up" or the like is defined relative to an orientation or a position at which a component is schematically placed in the accompanying drawings. It should be understood that these directional terms are relative concepts, and are used for relative description and clarification instead of indicating or implying that a specified apparatus or component needs to have a specific orientation or be constructed and operated in a specific orientation. These direction terms may vary based on changes of positions of the components in the accompanying drawings, and therefore cannot be understood as a limitation on this application.

Eighth, this application relates to a light-trapping structure. The light-trapping structure is an anti-reflection technology. A principle of the technology is to form some columns of tiny grooves or columnar structures on a material surface. When light is incident to a medium of the light-trapping structure, a propagation path of the light is prolonged, to increase light absorption. Therefore, when the light is reflected from the material surface, reflection and refraction occur for a plurality of times, to reduce intensity of reflected light.

Ninth, this application relates to an anti-reflection coating (anti-reflection coating, AR), which is also referred to as an anti-reflective coating or an anti-reflection film. The anti-reflection coating is formed by plating one or more layers of films on a substrate. These films are usually made of a material with a high refractive index and a material with a low refractive index alternately. A film layer with a high refractive index causes a phase delay of a light wave, and a film layer with a low refractive index causes a phase advance of the light wave. When light is incident from an external medium to a surface of a substrate, a part of light waves are reflected from the surface of the substrate, and the other part of light waves are transmitted through the substrate, and are reflected and emitted again, to interfere with reflected light from the surface. Therefore, a thickness and a refractive index of each layer are controlled, so that interference effect on the surface of the substrate is minimized, to reduce reflection and increase transmission.

FIG. 1 is a diagram of an application scenario of a HUD device according to an embodiment of this application. As shown in FIG. 1, the HUD device is disposed on a vehicle. The HUD device is configured to project status information of the vehicle, indication information of an external object, navigation information, and the like into a field of view of a driver by using a windshield (which may also be referred to as windscreen) of the vehicle. The status information includes but is not limited to information such as a driving speed, a driving mileage, a fuel level, a water temperature, and a vehicle light status. The indication information of the external object includes but is not limited to a safe inter-vehicle distance, a surrounding obstacle, a vehicle reversing image, and the like. The navigation information includes but is not limited to a direction arrow, a distance, driving time, and the like.

Virtual images corresponding to the navigation information and the indication information of the external object may be superimposed on a real environment outside the vehicle, so that the driver can obtain visual effect of augmented reality. For example, the virtual images may be used on an augmented reality (augmented reality, AR) navigation, adaptive cruise, lane departure warning, or the like. The virtual image corresponding to the navigation information may be combined with a real scene. Therefore, the HUD device usually works with an advanced driving assistant system (advanced driving assistant system, ADAS) of the vehicle. To avoid interfering with a road condition, a distance between human eyes and a virtual image corresponding to instrument information usually approximately ranges from 2 meters to 3 meters. To better fuse a real road surface with the virtual image corresponding to the navigation information, a distance between the human eyes and the virtual image corresponding to the navigation information usually approximately ranges from 7 meters to 15 meters. A position of the virtual image of the navigation information is referred to as a far focal plane. A plane at which the virtual image of the instrument information is located is referred to as a near focal plane.

At present, a research focus of HUD device is to avoid sunlight backflow and reduce a size. A main reason for sunlight backflow is that after external sunlight enters an imaging system, a backflow white spot is generated on a surface of a diffusion screen. After the white spot is reflected from the surface of the diffusion screen, the white spot re-enters an imaging optical path and enters the human eyes, which causes glare on a screen. Therefore, to avoid glare caused by sunlight backflow and improve user experience, in the HUD device, a normal direction of the diffusion screen is usually set to be not overlapped with a principal direction of imaging light. For example, in a common HUD device in which a liquid crystal on silicon (Liquid Crystal On Silicon, LCoS) is used as a display chip and a common HUD apparatus in which digital light processing (Digital Light Processing, DLP) is used for a display chip, a normal direction of a diffusion screen usually has an included angle of 15° to 30° with the principal direction of the imaging light. However, a principal direction of image light emitted by the display chip to the diffusion screen is usually less than or equal to 15°. Consequently, the principal direction of the image light incident to the diffusion screen does not match a design, which causes an energy loss and affects imaging quality. To ensure display effect of the HUD device, an angle arrangement between the PGU and the diffusion screen and an angle arrangement between the diffusion screen and a reflection element (configured to reflect the image light into the human eyes) need to strictly comply with the design. As a result, a spatial layout of the HUD device is limited, and it is difficult to reduce a size of the HUD device. To compensate for this design defect of the HUD device, in some solutions, a field lens, such as a cylindrical lens, is introduced into the HUD device to correct an angle of the image light incident to the diffusion screen. A diagram of an optical path in this solution is shown in FIG. 2. However, in this solution, because the cylindrical lens is thick and has a large size, more space is required in the HUD device to accommodate the cylindrical lens. As a result, the HUD device has a large size, and the thick cylindrical lens further affects imaging definition. In addition, the cylindrical lens further increases a reflective surface of a system, which results in stray light in the HUD device and increases probabilities of glare.

To avoid a plurality of defects caused by introduction of the field lens, this application provides a diffusion screen. Based on an anti-reflection film system disposed on at least one surface, glare caused by sunlight backflow to a display apparatus can be reduced, and display effect of a HUD can be improved. The solution of this application is different from the solution in which the field lens is introduced into a HUD optical path in that a size of the display apparatus is not increased, and deterioration of display effect caused by the field lens can be avoided.

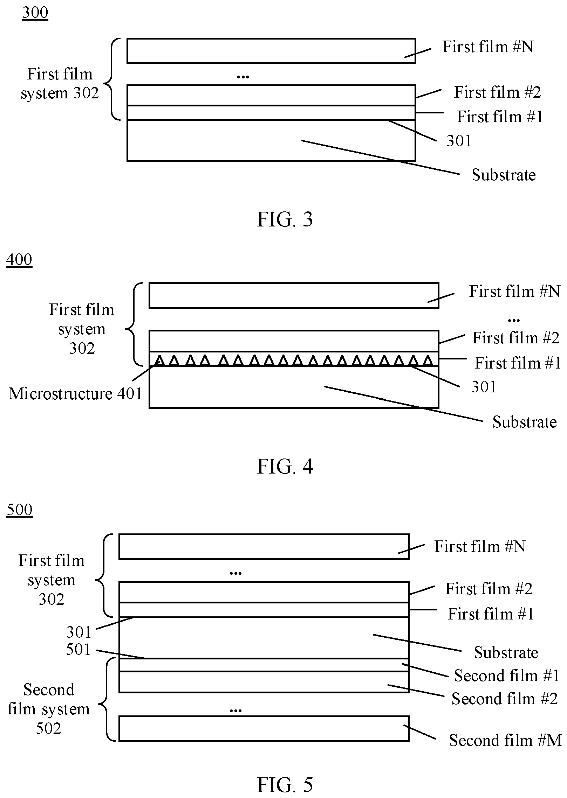

FIG. 3 is a diagram of a structure of a first diffusion screen 300 according to an embodiment of this application. As shown in FIG. 3, the diffusion screen 300 includes a first surface 301, a first film system 302 is disposed on the first surface 301, and the first film system 302 includes N layers of first films with different refractive indexes: a first film #1, a first film #2, ..., and a first film #N in FIG. 3, where N is an integer greater than or equal to 2. The first film system 302 is configured to reduce reflectivity of incident light on the first film system 302.

Optionally, the refractive indexes of the plurality of layers of first films of the first film system 302 gradually decrease in a direction away from the first surface 301.

For example, when N is equal to 5, the first film system 302 includes the first film #1, the first film #2, a first film #3, a first film #4, and a first film #5. In this case, the first film #1, the first film #2, the first film #3, the first film #4, and the first film #5 are sequentially arranged from the first surface 301 in the direction away from the first surface 301. That is, the first film #1 is disposed on the first surface 301, the first film #2 is disposed on the first film #1, the first film #3 is disposed on the first film #2, the first film #4 is disposed on the first film #3, the first film #5 is disposed on the first film #4, and the first film #5 is in contact with air. If a refractive index of the first film #1 is n1, a refractive index of the first film #2 is n2, a refractive index of the first film #3 is n3, a refractive index of the first film #4 is n4, and a refractive index of the first film #5 is n5, n1>n2>n3>n4>n5.

It may be understood that, in a HUD system, when sunlight is incident from the air to the first surface 301 of the diffusion screen 300, reflection and refraction occur. Reflected light may re-enter an imaging optical path, which causes glare of the HUD system, affects imaging quality, and poses a safety risk to a driver. After the first film system 302 is disposed on the first surface 301 of the diffusion screen 300, a refractive index of the first film system 302 does not cause a sudden change in a refractive index of the sunlight incident from the air to the first surface 301, and the refractive index gradually increases from the air to the first surface 301, so that transmittance of the sunlight can be increased, and reflectivity of the sunlight can be reduced. In addition, because the refractive indexes of the plurality of layers of films are different, light interference may be designed to occur between the plurality of layers of films, to cancel reflection and further improve transmittance.

Optionally, the first film system 302 is an anti-reflection coating.

It should be noted that, regardless of whether the first film system 302 is a multi-layer film with gradient refractive indexes, or an AR coating with alternating high and low refractive indexes, a refractive index of each layer of the first film system 302 is determined based on a refractive index of a material of the diffusion screen 300 and target reflectivity of the incident light on the first film system. In other words, when the material of the diffusion screen and the target reflectivity set by the system are determined, a quantity of layers, the refractive index, and a thickness of the first film system 302 may be designed based on the material of the diffusion screen and the target reflectivity set by the system, so that after the first film system 302 is disposed on the first surface of the diffusion screen 300, reflectivity of the reflected light is less than or equal to the target reflectivity.

Optionally, a substrate material of the diffusion screen 300 is polymethyl methacrylate (polymethyl methacrylate, PMMA), polycarbonate (polycarbonate, PC), optical glass, or the like. This is not limited in this application.

In this embodiment of this application, a process for the first film system 302 may be, for example, physical vapor deposition (physical vapor deposition, PVD), chemical vapor deposition (chemical vapor deposition, CVD) such as atomic layer deposition (Atomic Layer Deposition, ALD) or sputtering (sputtering) deposition, or wet coating. This is not limited in this application. For processes such as PVD, CVD, ALD, sputtering, and wet coating, refer to process descriptions in a related technology. Details are not described herein again. It may be understood that the foregoing listed processes for generating the first film system 302 are currently common coating processes, and other coating processes developed in the future should also be applicable to the solution of this application.

To further eliminate reflection from the first film system 302 and improve transmission performance, a microstructure may be provided on the first surface 301. FIG. 4 is a diagram of a structure of a second diffusion screen 400 according to an embodiment of this application. As shown in FIG. 4, a microstructure 401 is provided on a first surface 301 of the diffusion screen 400. The microstructure may also be referred to as a microstructure array, and the microstructure is configured to reduce reflectivity of incident light on the first surface 301.

Optionally, the microstructure is a light-trapping structure. When a tapered light-trapping structure is provided on the first surface 301 of the diffusion screen 400, the incident light is scattered at an interface of the nano-light-trapping structure, to reduce probabilities of reflection. Specifically, when the light is irradiated on a surface of the light-trapping structure, a part of light is reflected back, and the other part of light enters the inside of the light-trapping structure, and leaves a material surface after a plurality of times of reflection and refraction. Because there is a phase difference between the reflected light and the light entering the light-trapping structure, the two parts of light interfere with each other on the first surface 301, which further reduces intensity of the reflected light.

When the light-trapping structure is used, in this embodiment of this application, the first film system 302 may be a bionic anti-reflection optical coating based on a light-trapping characteristic of a butterfly scale, a bionic anti-reflection optical coating based on a light-trapping characteristic of a moth-eye structure, or the like. The light-trapping structure may be prepared in a method such as selective corrosion or etching. This is not limited in this application.

FIG. 5 is a diagram of a structure of a third diffusion screen 500 according to an embodiment of this application. As shown in FIG. 5, the diffusion screen 500 includes a first surface 301 and a second surface 501. A first film system 302 is disposed on the first surface 301, and the first film system 302 includes N layers of first films with different refractive indexes: a first film #1, a first film #2, ..., and a first film #N in FIG. 5, where N is an integer greater than or equal to 2. A second film system 502 includes M layers of second films with different refractive indexes: a second film #1, a second film #2, ..., and a second film #M in FIG. 5, where M is an integer greater than or equal to 2. The first film system 302 is configured to reduce reflectivity of incident light on the first film system 302. The second film system 502 is configured to reduce reflectivity of the incident light on the second film system 502.

Optionally, the refractive indexes of the plurality of layers of first films of the first film system 302 gradually decrease in a direction away from the first surface 301. The refractive indexes of the plurality of layers of second films of the second film system 502 gradually decrease in a direction away from the second surface 501.

For example, when N is equal to 5, and M is equal to 3, the first film system 302 includes the first film #1, the first film #2, a first film #3, a first film #4, and a first film #5. In this case, the first film #1, the first film #2, the first film #3, the first film #4, and the first film #5 are sequentially arranged in the direction away from the first surface 301. That is, the first film #1 is disposed on the first surface 301, the first film #2 is disposed on the first film #1, the first film #2 is disposed on the first film #3, the first film #3 is disposed on the first film #4, the first film #4 is disposed on the first film #5, and the first film #5 is in contact with air. The second film system 502 includes the second film #1, the second film #2, and a second film #3. In this case, the second film #1, the second film #2, and the second film #3 are sequentially arranged in the direction away from the second surface 501. That is, the second film #1 is disposed on the second surface 501, the second film #2 is disposed on the second film #1, the second film #2 is disposed on the second film #3, and the first film #3 is in contact with the air. If a refractive index of the first film #1 is n11, a refractive index of the first film #2 is n12, a refractive index of the first film #3 is n13, a refractive index of the first film #4 is n14, and a refractive index of the first film #5 is n15, n11>n12>n13>n14>n15. If a refractive index of the second film #1 is n21, a refractive index of the first film #2 is n22, and a refractive index of the first film #3 is n23, n21>n22>n23.

Optionally, at least one of the first film system 302 and the second film system 502 is an anti-reflection coating.

It should be noted that, in the diffusion screen 500 shown in FIG. 5, the first film system 302 may be the same as the second film system 502, or the first film system 302 may be different from the second film system 502.

For example, when the first film system 302 is the same as the second film system 502, film systems disposed on the first surface 301 and the second surface 501 of the diffusion screen 500 are completely the same. When the second film system 502 and the first film system 302 are the same film system, for related descriptions of the second film system 502, refer to the descriptions in FIG. 3 and FIG. 4. Details are not described herein again.

For example, when the first film system 302 is different from the second film system 502, the first film system 302 may be different from the second film system 502 in at least one of the following:

A quantity of the film layers of the first film system 302 is different from a quantity of the film layers of the second film system 502; a refractive index of at least one of the plurality of layers of first films is different from a refractive index of at least one of the plurality of layers of second films; and a thickness of at least one of the plurality of layers of first films is different from a thickness of at least one of the plurality of layers of second films.

When the quantity of the film layers of the first film system 302 is different from the quantity of the film layers of the second film system 502, the quantity of the layers of the first film system 302 may be greater than the quantity of the layers of the second film system 502. For example, in FIG. 5, N is greater than M. Alternatively, the quantity of the layers of the first film system 302 may be less than the quantity of the layers of the second film system 502. That is, in FIG. 5, N is less than M.

When the refractive index of the at least one of the plurality of layers of first films in the first film system 302 is different from the refractive index of the at least one of the plurality of layers of second films in the second film system 502, a refractive index of one or more of the plurality of layers of first films in the first film system 302 may be different from a refractive index of one or more first films of the plurality of layers of second films in the second film system 502. For example, if N is equal to M in this case, the refractive index of the at least one first film in the first film system 302 may be different from the refractive index of the at least one second film in a corresponding position in the second film system 502. For example, the refractive index of the first film #1 is different from the refractive index of the second film #1, or when the refractive index of the first film #1 is different from the refractive index of the second film #1, the refractive index of the first film #3 is different from the refractive index of the second film #3. Similarly, other different cases are not enumerated herein.

When the thickness of the at least one of the plurality of layers of first films in the first film system 302 is different from the thickness of the at least one of the plurality of layers of second films in the second film system 502, a thickness of one or more of the plurality of layers of first films in the first film system 302 may be different from a thickness of one or more first films of the plurality of layers of second films in the second film system 502. For example, if N is equal to M in this case, the thickness of the at least one first film in the first film system 302 may be different from the thickness of the at least one second film in a corresponding position in the second film system 502. For example, a thickness of the first film #1 is different from a thickness of the second film #1, or when a thickness of the first film #1 is different from a thickness of the second film #1, a thickness of the first film #2 is different from a thickness of the second film #2. Similarly, other different cases are not enumerated herein.

It may be understood that, when the diffusion screen 500 is used in a HUD system, compared with single-side film systems, dual-side film systems can further reduce reflected light of sunlight backflow, and can enhance transmission of image light in the diffusion screen 500. In other words, the diffusion screen 500 can reduce reflectivity of stray light and also reduce a loss of the image light.

It may be further understood that both the first film system 302 and the second film system 502 may be film systems with gradient refraction ratios, or may be anti-reflection coatings; or one of the first film system 302 and the second film system 502 is a film system with gradient refraction ratios, and the other one of the first film system 302 and the second film system 502 is an anti-reflection coating. This is not limited in this application.

It may be understood that a process for the second film system 502 may be, for example, PVD, CVD, ALD, sputtering, or wet coating. This is not limited in this application.

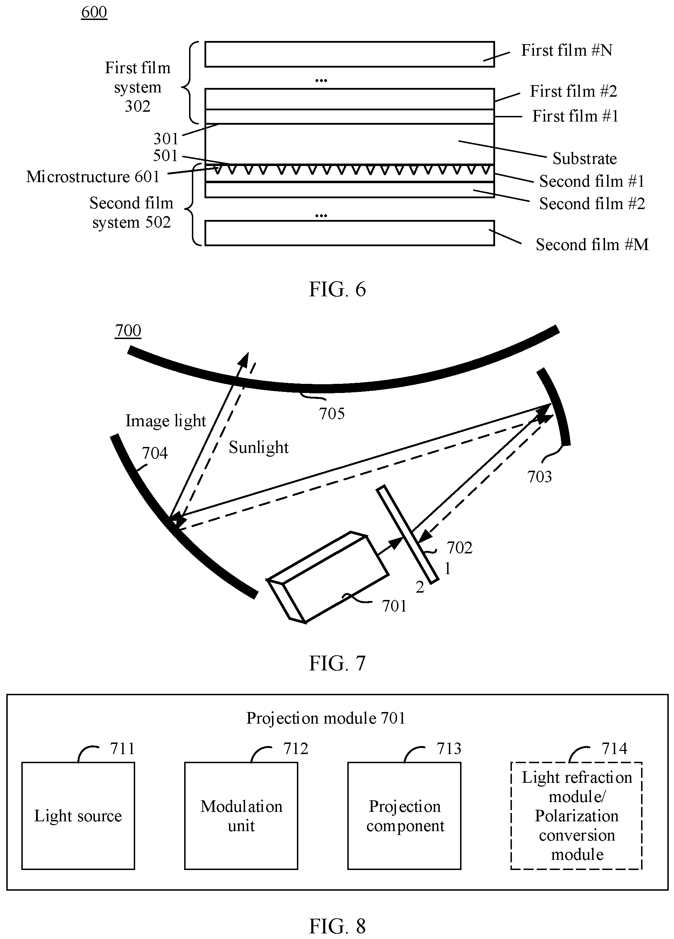

In addition, to further eliminate reflection from the first film system 502 and improve transmission performance, a microstructure (for example, a light-trapping structure) may be provided on the second surface 501 in a method such as selective corrosion or etching. As shown in FIG. 6, a microstructure 601 is provided on the second surface 501 of the diffusion screen 600, so that intensity of reflected light is further reduced, and intensity of transmitted light is enhanced. It may be understood that, when the microstructure is provided on the second surface 501, according to a requirement on reflectivity of the reflected light, a microstructure may be or may not be provided on the first surface 301. This is not limited in this application.

The following describes some possible structures of a display apparatus provided in this application with reference to the diffusion screens shown in FIG. 3 to FIG. 6.

FIG. 7 is a diagram of a display apparatus 700 according to an embodiment of this application. As shown in FIG. 7, the display apparatus 700 includes a projection module 701, a diffusion screen 702, a first reflection element 703, and a second reflection element 704. The projection module 701 is configured to project image light onto a second surface (for example, a surface 2 in FIG. 7) of the diffusion screen 702. The diffusion screen 702 is configured to: transmit, from a first surface (for example, a surface 1 in FIG. 7), the image light from the projection module to the first reflection element, and generate a relay image on the first surface based on the image light from the projection module. The first reflection element 703 is configured to reflect, to the second reflection element 704, the image light emitted by the diffusion screen 702. The second reflection element 704 is configured to reflect, to a human eye, the image light reflected by the first reflection element 703. The diffusion screen 702 may be any diffusion screen shown in FIG. 3 to FIG. 6, or a new diffusion screen designed based on any diffusion screen shown in FIG. 3 to FIG. 6.

It may be understood that, the display apparatus 700 provided in this application uses the diffusion screen (including any one of the diffusion screen 300, the diffusion screen 400, the diffusion screen 500, and the diffusion screen 600) that is provided in this application and that is configured to reduce reflectivity of incident light. After entering the display apparatus 700 from the outside, sunlight is reflected sequentially by the second reflection element 704 and the first reflection element 703 to the diffusion screen 702. Because at least one of a first film system or a second film system is disposed on the surface of the diffusion screen 702, reflected light of the sunlight from the diffusion screen 702 can be reduced, to avoid a glare phenomenon generated because the reflected light re-enters an imaging optical path and is mixed with the image light.

Optionally, the display apparatus 700 may further include a dust cover 705. The dust cover 705 has functions of isolating external high temperatures, preventing internal temperatures of the display apparatus 700 from becoming excessively high, preventing external dust from entering the apparatus, or the like.

To further reduce glare generated due to the reflected light, in some embodiments, an included angle, for example, an included angle greater than 15°, may be formed between a perpendicular bisector of the diffusion screen 702 and a chief ray of the image light.

In this embodiment of this application, the projection module 701 may be an LCoS display, an organic light-emitting diode (Organic Light-Emitting Diode, OLED) display, a liquid crystal display (Liquid Crystal Display, LCD), a digital light processing (Digital Light Processing, DLP) display, a micro-electro-mechanical systems (Micro-Electro-Mechanical Systems, MEMS) display, or the like. This is not limited in this application.

It should be noted that in the display apparatus 700 shown in FIG. 7, the first reflection element 703 may be a concave mirror, a convex mirror, or a plane mirror whose surface is a freeform surface. This is not limited in this application.

It may be understood that a quantity of reflection elements included in the display apparatus 700 is not limited to that shown in FIG. 7, and may be correspondingly adjusted according to a requirement.

In an example, FIG. 8 shows a possible structure of a projection module 701 according to an embodiment of this application. The projection module 701 includes a light source 711, a modulation unit 712, and a projection component 713. According to different display technologies used by the projection module 701, the modulation unit 712 may be an LCoS modulator, a DMD, a transmissive spatial light modulator LCD, or the like. For example, when the modulation unit 712 is an LCoS modulator, the light source 711 may be a red, green, and blue tri-color light-emitting diode (light-emitting diode) light source, and jointly forms an LCoS display with the LCoS modulator. When the modulation unit 712 is a DMD, the modulation unit 712 may be a DMD modulator controlled by an MEMS, and may be used together with a laser light source or an LED light source to form a DLP display. Alternatively, when the modulation unit 712 is an LCD modulator, the light source 711 may be a linear light source, to be specific, a red, green, and blue tri-color cold cathode fluorescent tube, and forms an LCD display with the LCD modulator. The projection component 713 may be a projection lens.

Optionally, to improve projection quality and/or reduce a size of the projection module 701, in some embodiments, the projection module 701 further includes a light refraction module 714, or the projection module 701 further includes a polarization conversion module 714. When the projection module 701 includes the light refraction module 714, the light refraction module 714 may be one or more lenses (configured to: focus energy of a light beam to ensure the energy of the light beam; or diffuse a light spot to increase a field of view of projection), one or more prisms (configured to: fold an optical path to reduce the size of the projection module), and/or the like. This is not limited in this application. When the projection module 701 includes the polarization conversion module 714, the polarization conversion module 714 is configured to change a polarization state of image light.

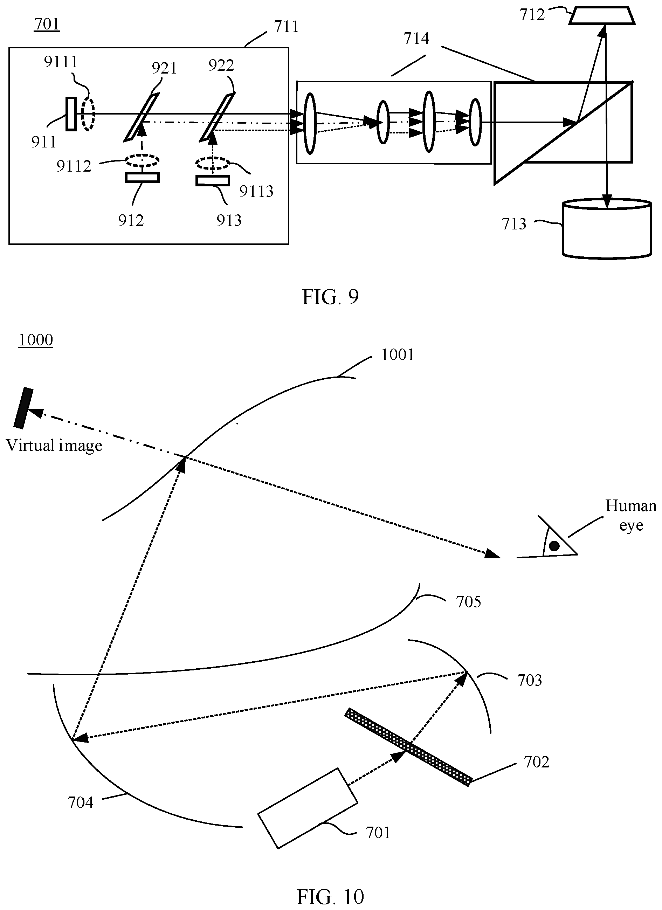

In an example, FIG. 9 shows a possible structure of a projection module 701 whose modulation unit 712 is a DMD according to an embodiment of this application. As shown in FIG. 9, the light source 711 includes a first monochromatic light array 911, a second monochromatic light array 912, a third monochromatic light array 913, dichroic filters 921 and 922, and a lens group 933. The three monochromatic light arrays may respectively correspond to monochromatic light of three primary colors, including red light, blue light, and green light. To improve light energy utilization, in some embodiments, collimating lenses are further arranged behind the monochromatic light arrays, for example, a collimating lens 9111, a collimating lens 9112, and a collimating lens 9113 in FIG. 9. The light refraction module 714 includes a lens group and a prism. Specifically, when the projection module 701 is used in the display apparatus 700 shown in FIG. 7, the first monochromatic light array 911, the second monochromatic light array 912, and the third monochromatic light array 913 separately emit corresponding monochromatic light, and three types of monochromatic light are incident to the lens group of the light refraction module through the dichroic filters 921 and 922, and are incident to the DMD 712 through the prism after being emitted from the lens group. The DMD 712 modulates input light beams based on data information of an input image, and outputs image light. The image light is transmitted through the prism, incident to the projection component 713, and emitted to the diffusion screen through the projection component 713.

When the display apparatus 700 is used in a transportation means, FIG. 10 is a diagram of an optical path 1000 of a display apparatus 700 used in a transportation means according to an embodiment of this application. Specifically, the projection module 701 generates image light and projects the image light onto the diffusion screen 702. The diffusion screen 702 generates a relay image and transmits the image light from the projection module to the first reflection element 703 at the same time. Then, the first reflection element 703 reflects the image light from the diffusion screen 702 to the second reflection element 704. After being reflected by the second reflection element 704, the image light is transmitted through a light shielding cover 705 and is reflected by a windshield 1001 to a human eye for imaging. An image generated based on the image light may be an augmented reality display image used to display information such as indication information and navigation information of an external object. Alternatively, an image generated based on the image light may be a status display image used to display status information of the transportation means. A vehicle is used as an example. The status information of the transportation means includes but is not limited to information such as a driving speed, a driving mileage, a fuel level, a water temperature, and a vehicle light status.

It may be understood that a transportation means to which the solutions of this application may be applied includes but is not limited to a vehicle, an airplane, a train, a ship, or the like.

In addition, an embodiment of this application further provides a transportation means. The transportation means includes any one of the foregoing display devices. The transportation means includes but is not limited to a vehicle, an airplane, a train, a ship, or the like.

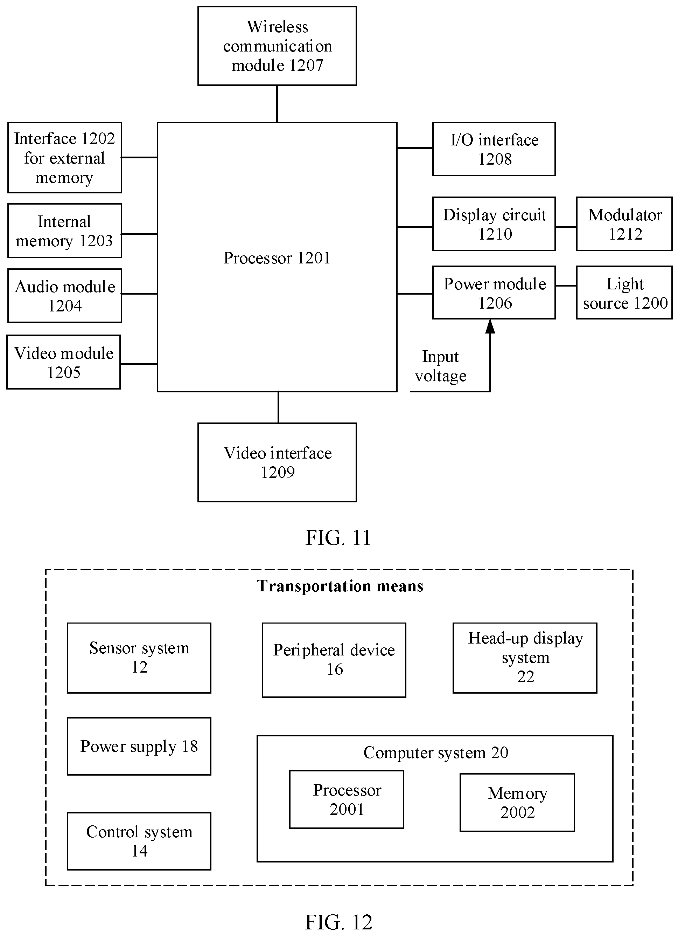

FIG. 11 is a circuit schematic of a display apparatus according to an embodiment of this application. As shown in FIG. 11, a circuit in the display apparatus mainly includes a main processor (host CPU) 1201, an interface 1202 for external memory, an internal memory 1203, an audio module 1204, a video module 1205, a power module 1206, a wireless communication module 1207, an I/O interface 1208, a video interface 1209, a display circuit 1210, and a modulator 1212. The main processor 1201 may be connected, through a bus, to peripheral elements of the main processor 1201, such as the interface 1202 for external memory, the internal memory 1203, the audio module 1204, the video module 1205, the power module 1206, the wireless communication module 1207, the I/O interface 1208, the video interface 1209, and the display circuit 1210. The main processor 1201 may be referred to as a front-end processor.

In addition, the circuit schematic in this embodiment of this application does not constitute a specific limitation on the display apparatus. In some other embodiments of this application, the display apparatus may include more or fewer components than those shown in the figure, or a combination of some components, or splits from some components, or a different component layout. The components shown in the figure may be implemented by hardware, software, or a combination of software and hardware.

The main processor 1201 includes one or more processing units. For example, the main processor 1201 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-Network Processing Unit, NPU), and the like. Different processing units may be independent components, or may be integrated into one or more processors.

A memory may be further disposed in the main processor 1201, and is configured to store instructions and data. In some embodiments, the memory in the main processor 1201 is a cache. The memory may store instructions or data that has been recently used or cyclically used by the main processor 1201. If the main processor 1201 needs to use the instructions or the data again, the main processor may directly invoke the instructions or the data from the memory. This avoids repeated access, reduces waiting time of the main processor 1201, and therefore improves system efficiency.

In some embodiments, the display apparatus may further include a plurality of input/output (Input/Output, I/O) interfaces 1208 connected to the main processor 1201. The interface 1208 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1208 may be connected to a device such as a mouse, a touchpad, a keyboard, a camera, a speaker/horn, a microphone, or the like, or may be connected to a physical button (for example, a volume button, a brightness adjustment button, a power button, or the like) on the display apparatus.

The interface 1202 for external memory may be configured to connect to an external storage card, for example, a micro SD card, to extend a storage capability of the display apparatus. The external storage card communicates with the main processor 1201 through the interface 1202 for external memory, to implement a data storage function.

The internal memory 1203 may be configured to store computer-executable program code. The executable program code includes instructions. The internal memory 1203 may include a program storage region and a data storage region. The program storage region may store an operating system, an application required by at least one function (for example, a call function or a time setting function), and the like. The data storage area may store data (such as a phone book and world time) created in a process of using the display apparatus, and the like. In addition, the internal memory 1203 may include a high-speed random access memory, and may further include a non-volatile memory, for example, at least one magnetic disk storage device, a flash storage device, a universal flash storage (Universal Flash Storage, UFS), or the like. The main processor 1201 executes various functional applications and data processing of the display apparatus by running the instructions stored in the internal memory 1203 and/or the instructions stored in the memory disposed in the main processor 1201.

The display apparatus may implement audio functions such as music playing and call through the audio module 1204, the application processor, and the like.

The audio module 1204 is configured to convert digital audio information into an analog audio signal output, and is also configured to convert an analog audio input into a digital audio signal. The audio module 1204 may be further configured to encode and decode an audio signal, for example, perform voice playing or voice recording. In some embodiments, the audio module 1204 may be disposed in the main processor 1201, or some functional modules of the audio module 1204 are disposed in the main processor 1201.

The video interface 1209 may receive audio and video signal input externally, and may be specifically a high-definition multimedia interface (High-Definition Multimedia Interface, HDMI), a digital visual interface (Digital Visual Interface, DVI), a video graphics array (Video Graphics Array, VGA), a display port (Display port, DP), or the like. The video interface 1209 may further output a video externally. When the display apparatus is used as a head-up display, the video interface 1209 may receive a speed signal and a power signal that are input by a nearby device, and may further receive an AR video signal input externally. When the display apparatus is used as a projector, the video interface 1209 may receive a video signal input by an external computer or a terminal device.

The video module 1205 may decode a video input by the video interface 1209, for example, perform H.264 decoding. The video module may further encode a video collected by the display apparatus, for example, perform H.264 encoding on a video collected by an external camera. In addition, the main processor 1201 may also decode the video input by the video interface 1209, and then output a decoded image signal to the display circuit 1210.

The display circuit 1210 and the modulator 1212 are configured to display a corresponding image. In this embodiment, the video interface 1209 receives a video source signal input externally, the video module 1205 performs decoding and/or digitization processing and outputs one or more image signals to the display circuit 1210, and the display circuit 1210 drives, based on the input image signal, the modulator 1212 to perform imaging for incident polarized light, to output image light. In addition, the main processor 1201 may also output the one or more image signals to the display circuit 1210.

In this embodiment, the display circuit 1210 and the modulator 1212 are electronic components in the modulation unit 712 shown in FIG. 8. The display circuit 1210 may be referred to as a drive circuit.

The power module 1206 is configured to supply power to the main processor 1201 and a light source 1200 based on input power (for example, a direct current). The power module 1206 may include a rechargeable battery, and the rechargeable battery may supply power to the main processor 1201 and the light source 1200. Light emitted by the light source 1200 may be propagated to the modulator 1212 for imaging, to form an image light signal.

The wireless communication module 1207 may enable the display apparatus to perform wireless communication with the outside, and may provide wireless communication solutions such as a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near-field communication (Near-Field Communication, NFC) technology, and an infrared (Infrared, IR) technology. The wireless communication module 1207 may be one or more components integrating at least one communication processing module. The wireless communication module 1207 receives an electromagnetic wave through an antenna, performs frequency modulation and filtering processing on an electromagnetic wave signal, and sends a processed signal to the main processor 1201. The wireless communication module 1207 may further receive a to-be-sent signal from the main processor 1201, perform frequency modulation and amplification on the signal, and convert, through the antenna, the signal into an electromagnetic wave for radiation.

In addition, in addition to being input through the video interface 1209, video data decoded by the video module 1205 may alternatively be received in a wireless manner through the wireless communication module 1207 or be read from the external memory. For example, the display apparatus may receive the video data from the terminal device or an in-vehicle entertainment system through a wireless local area network in a vehicle, and the display apparatus may further read audio and video data stored in the external memory.

The display apparatus may be mounted on a transportation means. FIG. 12 is a diagram of a possible functional framework of a transportation means according to an embodiment of this application.

As shown in FIG. 12, the functional framework of the transportation means may include various subsystems such as a sensor system 12, a control system 14, one or more peripheral devices 16 (one is shown as an example in the figure), a power supply 18, a computer system 20, and a head-up display system 22. Optionally, the transportation means may further include another functional system, for example, an engine system that supplies power to the transportation means. This is not limited herein in this application.

The sensor system 12 may include several detection apparatuses. The detection apparatuses can sense measured information, and convert, according to a specific rule, the sensed information into an electrical signal or information in another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 14 may include several elements, for example, a steering unit, a brake unit, a lighting system, an autonomous driving system, a map navigation system, a network time system, and an obstacle avoidance system shown in the figure. Optionally, the control system 14 may further include elements such as a throttle controller and an engine controller that are configured to control a driving speed of a vehicle. This is not limited in this application.

The peripheral device 16 may include several elements, for example, a communication system, a touchscreen, a user interface, a microphone, and a speaker shown in the figure. The communication system is configured to implement network communication between the transportation means and another device other than the transportation means. During actual application, the communication system may implement network communication between the transportation means and the another device by using a wireless communication technology or a wired communication technology. The wired communication technology may mean that the vehicle communicates with the another device through a network cable, an optical fiber, or the like.

The power supply 18 represents a system used for providing power or energy for the vehicle, and may include but is not limited to a rechargeable lithium battery and lead-acid battery. During actual application, one or more battery components in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (which may also be referred to as a storage apparatus). During actual application, the memory 2002 is also disposed inside the computer system 20, or may be disposed outside the computer system 20, for example, used as a cache in the transportation means. This is not limited in this application. The processor 2001 may include one or more general-purpose processors, for example, a graphics processing unit (graphics processing unit, GPU).

The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to storing the program code or instructions, the memory 2002 may further store information such as a road map, a driving route, and sensor data. The computer system 20 may implement a vehicle-related function in combination with other elements in the diagram of the functional framework of the vehicle, for example, the sensor and the GPS in the sensor system. For example, the computer system 20 may control a driving direction, a driving speed, or the like of the transportation means based on data input of the sensor system 12. This is not limited in this application.

The head-up display system 22 may include several elements, for example, a windshield, a controller, and a head-up display shown in the figure. The controller 222 is configured to: generate an image (for example, generate an image including a vehicle status such as a vehicle speed and a power/fuel amount, or an image of augmented reality AR content) according to a user instruction, and send the image to the head-up display for display. The head-up display may include a picture generation unit and a reflector combination. The windshield is configured to cooperate with the head-up display to implement a light path of the head-up display system, so that a target image is presented in front of a driver. Functions of some elements in the head-up display system may alternatively be implemented by another subsystem of the vehicle. For example, the controller may alternatively be an element in the control system.

FIG. 12 in this application shows that four subsystems are included. The sensor system 12, the control system 14, the computer system 20, and the head-up display system 22 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

The transportation means may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

Unless otherwise defined, a technical term or a scientific term used herein should have a general meaning understood by a person of ordinary skill in the art of the present disclosure.

The foregoing descriptions are merely an embodiment of this application, but are not intended to limit this application. Any modification, equivalent replacement, or improvement made without departing from the principle of this application shall fall within the protection scope of this application.

## Claims

1. A diffusion screen, comprising: a first surface, wherein
a first film system is disposed on the first surface, the first film system comprises a plurality of layers of first films with different refractive indexes, and the first film system is configured to reduce reflectivity of incident light on the first film system.

2. The diffusion screen according to claim 1, wherein
the refractive indexes of the plurality of layers of first films gradually decrease in a direction away from the first surface.

3. The diffusion screen according to claim 1 or 2, wherein the diffusion screen further comprises a second surface, the second surface is opposite to the first surface, and the first film system is disposed on the second surface.

4. The diffusion screen according to claim 3, wherein
the refractive indexes of the plurality of layers of first films gradually decrease in a direction away from the second surface.

5. The diffusion screen according to claim 1 or 2, wherein the diffusion screen further comprises a second surface, the second surface is opposite to the first surface, a second film system is disposed on the second surface of the diffusion screen, the second film system comprises a plurality of layers of second films with different refractive indexes, and the second film system is configured to reduce reflectivity of the incident light on the second film system; and
the first film system and the second film system are different in at least one of the following:
a quantity of the layers of the first film system and a quantity of the layers of the second film system, a refractive index of at least one of the plurality of layers of first films and a refractive index of at least one of the plurality of layers of second films, and a thickness of at least one of the plurality of layers of first films and a thickness of at least one of the plurality of layers of second films.

6. The diffusion screen according to claim 5, wherein
the refractive indexes of the plurality of layers of second films gradually decrease in a direction away from the second surface.

7. The diffusion screen according to claim 5, wherein at least one of the first film system and the second film system is an anti-reflection AR coating.

8. The diffusion screen according to any one of claims 5 to 7, wherein at least one of the first film system and the second film system comprises a microstructure, and the microstructure is configured to reduce reflectivity of the incident light on the film system comprising the microstructure.

9. The diffusion screen according to any one of claims 1 to 8, wherein a refractive index of the first film system is determined based on a refractive index of the diffusion screen and target reflectivity of the incident light on the first film system.

10. A display apparatus, comprising a projection module, a first reflection element, a second reflection element, and the diffusion screen according to any one of claims 1 to 9, wherein
the projection module is configured to project image light onto the second surface of the diffusion screen, wherein the second surface is opposite to the first surface;
the diffusion screen is configured to: transmit, from the first surface, the image light from the projection module to the first reflection element, and generate a relay image on the first surface based on the image light from the projection module;
the first reflection element is configured to reflect the image light from the diffusion screen to the second reflection element; and
the second reflection element is configured to reflect the image light from the first reflection element to a human eye.

11. The display apparatus according to claim 10, wherein an included angle between a normal line of the second surface and the image light incident to the second surface is greater than or equal to 15°.

12. A transportation means, comprising the display apparatus according to claim 10 or 11 and a windshield, wherein
the windshield is configured to reflect the image light from the display apparatus to a human eye.

13. An in-vehicle system, comprising the display apparatus according to claim 10 or 11.
